# EUROPEAN PATENT SPECIFICATION

(11) **EP 1 420 498 B1**
(45) Date of publication and mention of the grant of the patent: **14.06.2006**
(21) Application number: 02025705.1
(22) Date of filing: 15.11.2002
(51) Int. Cl.: H02K 1/14, H02K 15/02

(54) **Stator assembly for an electrical machine and method of manufacturing the same**
Ständeraufbau für eine elektrische Maschine und Herstellungsverfahren für denselben
Assemblage de stator d'une machine électrique et méthode de production du même

(43) Date of publication of application: 19.05.2004
(73) Proprietor: MINEBEA Co., Ltd., Kitasaku-gun, Nagano-ken (JP)
(72) Inventor: Borsai, Peter, 78532 Tuttlingen (DE); Popov, Vladimir Vladimirovich, 78052 Villingen-Schwenningen (DE)
(74) Representative: Liesegang, Eva

(56) References cited:
- DE-C- 534 319
- US-A- 3 983 435
- US-A- 4 546 282
- PATENT ABSTRACTS OF JAPAN vol. 2000, no. 09, 13 October 2000 (2000-10-13) -& JP 2000 184682 A (MITSUBISHI ELECTRIC CORP), 30 June 2000 (2000-06-30)
- PATENT ABSTRACTS OF JAPAN vol. 1998, no. 13, 30 November 1998 (1998-11-30) -& JP 10 214740 A (TOSHIBA FA SYST ENG KK;TOSHIBA CORP), 11 August 1998 (1998-08-11)

## Description

The present invention relates to a stator assembly for an electrical machine and a method of manufacturing a stator assembly.

One field of application of the present invention is the field of brushless D.C. motors and other P.M. (= Permanent Magnet) motors comprising permanent magnets which can be configured to include an inner rotor surrounded by a stator (Innenläufermotor) or an outer rotor configuration (Außenläufermotor). However, the present invention, in general, can be used in any type of rotational electrical machines.

Electrical machines having an inner rotor configuration include a rotor assembly which is mounted on the motor shaft and one or more permanent magnets as well as a stator assembly, such as a stator laminated from a number of metal sheets, comprising phase windings. The rotor assembly is coaxially inserted into the stator assembly. In electrical machines having outer rotor configuration the stator assembly surrounds the rotor.

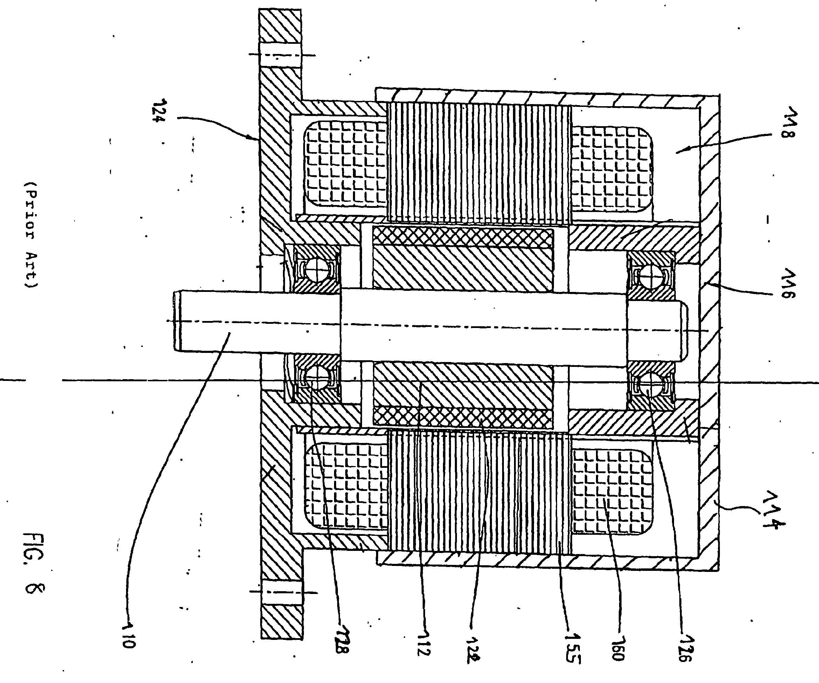

Fig. 8 schematically shows the general design of an electrical machine, comprising a housing 114, in which are included the stator assembly 118, the rotor assembly 116 as well as bearing 126, 128 for rotatably supporting the rotor assembly. The stator assembly 118 comprises sheet metals 155 and phase windings 160 and defines an interior cavity into which the rotor assembly 116 can be inserted. The rotor assembly 116 includes the shaft 110, a yoke 112 and permanent magnets 122. The bearings 126, 128 for the rotor assembly 116 can be integrated into a flange 124 of the motor housing 114.

More particularly, the present invention relates to a stator assembly for an electrical machine comprising a number of metal sheets arranged on top of each other to form a layered structure and a method of manufacturing such a stator assembly.

It is known in the art to design a stator body from a number of metal sheets, stamped to have a shape corresponding to the cross section of the stator core and laminated on top of each other in the axial direction of the stator core. A stator core laminated from a number of sheet metals is able to provide a good, even current distribution through the stator core, reducing eddy currents.

Further, it is known in the prior art to design a stator core having a number of stator segments wherein one stator segment usually comprises one stator tooth. Examples of prior art references describing a segmented stator having a plurality of stator teeth held in a circular pattern are U.S. patent 6,359,335; WO 02/47238; U.S. patent 5,786,651; DE 198 42 948; EP 0 915 553; U.S. patent 6,049,153, U.S. patent 5,796,195; EP 1 014 536; and WO 02/47240. The advantage of providing a stator core having stator segments, each segment comprising one stator tooth, is that each segment of the stator can be configured to receive a pre-wound coil on a respective tooth or pole. Only after providing the coils on the respective teeth or poles of the stator segments, these stator segments are interconnected in series and are arranged to form one annular stator. In other words, designing a stator core from a plurality of separate stator segments facilitates the winding technique for providing the phase windings on the stator body.

When manufacturing a stator core from laminated sheet metal, as a whole or by providing a number of separate stator segments, the layers of the stator core are stamped from a metal sheet in a way that a relatively large amount of waste material is created due to the particular shape of the stator sheets.

US 3,983,435 discloses a stator assembly for an electrical machine comprising a plurality of sheet metals or sheet bands forming a structure which extends in a direction which is generally parallel to a longitudinal axis of the stator assembly. This structure is bent to form a stator core including a plurality of teeth. A similar stator structure is described in US patent 4,546,282.

It is an object of the present invention to provide a stator assembly for an electrical machine which can be manufactured efficiently and cooled easily. In particular, a simple method of stator core manufacturing and stator winding shall be proposed.

This object is solved by a stator assembly for an electrical machine comprising the features of claim 1 and a method of manufacturing a stator assembly according to claim 8.

According to the present invention, the stator assembly comprises at least one, and preferably a number of metal sheets, in particular metal bands, arranged on top of each other to form a layered structure. The one or more layers of said structure extend in a direction which is generally parallel to a longitudinal axis of the final stator assembly, wherein the layered structure is bent to form at least one sector of a stator. The difference between the present invention and the laminated stator cores of the prior art is that, according to the present invention, the one or more layers of the layered structure extend parallel to longitudinal axis of the stator assembly wherein, in the prior art, each layer extends perpendicular to the longitudinal axis of the stator core. By manufacturing the stator core or stator body from a number of laminated metal bands a number of advantages arise. When stamping the metal bands from sheet metal, due to the simple geometry of the metal bands, hardly any waste material will be created. Further, the stator core can be manufactured easily by arranging the laminated band structure parallel to the longitudinal axis of the stator assembly and bending said laminated band structure to have the shape of stator teeth and connecting sections between said stator teeth. The structure which is bend from the laminated metal bands can be either a stator segment comprising one or more stator teeth or poles and connecting sections therebetween or can be a series of stator teeth comprising a larger fraction or all of the teeth of the final stator assembly. The series of stator teeth can be arranged in a straight line first before the metal band is bent to have the shape of a closed stator ring. Further, the teeth of the bent stator structure may receive phase windings, such as pre-wound coils or individual windings before the stator teeth are joined to form one closed stator ring.

A further advantage of the present invention arises from the fact that the layered structure formed from the laminated metal bands can be bent to form stator teeth including a longitudinal gap in the interior of each tooth. This gap can be used as a ventilation channel for cooling the stator teeth. As high temperatures are created in the area of the phase windings surrounding the stator teeth, cooling the stator in this region can be particularly advantageous.

In one specific embodiment of the present invention a thermal sensor can be provided in the gap for sensing the stator temperature during operation. The thermal sensor can be connected to an electronic circuit for controlling the stator temperature.

Preferably, the layers of said layered structure are joined at their edges with a neighboring layered structure in an interlacing manner.

Further, the stator core formed from the layered structure can be surrounded by a second layered structure comprising one or more metal bands and forming a yoke.

In the following the invention is described by way of preferred embodiments of the invention with reference to the drawings.
- Fig. 1: shows a schematic perspective view of a stator assembly according to the present invention, where part of the stator assembly is cut away;
- Fig. 2: shows a schematic perspective view of the stator assembly of Fig. 1, comprising a yoke surrounding the stator core;
- Fig. 3: shows a schematic perspective view of a stator segment for forming a stator assembly according to the present invention;
- Fig. 4: shows a schematic perspective view of a stator assembly formed from a plurality of stator segments according to Fig. 3 and including a yoke surrounding the stator core;
- Fig. 5a, 5b, 5c, 5d, 5e, 5f: show different shapes of tooth tips which can be implemented in the present invention;
- Fig. 6: shows a schematic sectional view through part of a stator assembly formed from a plurality of stator segments and including a yoke surrounding the stator core, according to a further embodiment of the invention;
- Fig. 7a, and 7b: show two schematic perspective views of a stator segments for forming a stator assembly according to further embodiments of the invention;
- Fig. 8: shows a schematic sectional view in a longitudinal direction through an electrical machine according to the prior art.

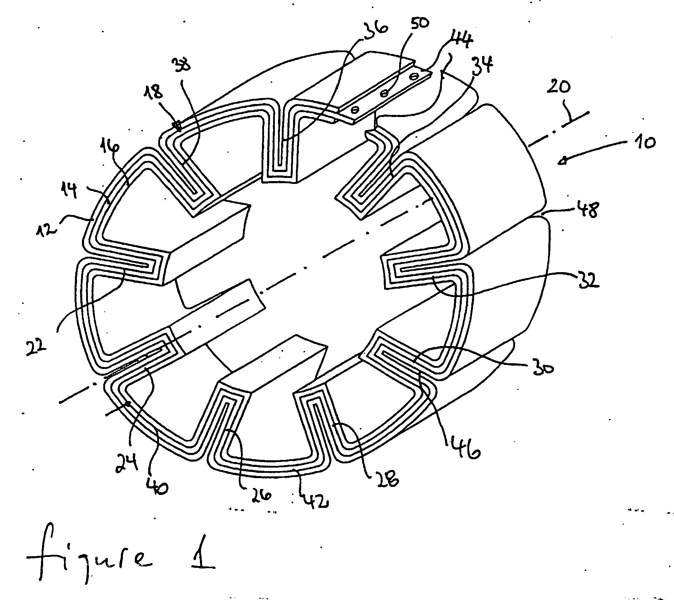

Fig. 1 schematically shows a perspective view of a stator assembly according the present invention, forming a stator core. The stator assembly 10 shown in Fig. 1 is formed from three metal bands 12, 14, 16 which are arranged on top of each other to form a layered structure 18. The layers are laminated on top of each other and are connected e.g. by welding, glueing or application of rivets.

While in the preferred embodiment of the present invention, the stator assembly is formed from a layered structure, comprising a number of metal bands 12, 14, 16, it is also possible to construct the stator assembly according to the present invention from just one metal band, suitably bent to form the stator assembly, as described below.

The layers 12, 14, 16 of the layered structure 18 extend in a direction which is generally parallel to a longitudinal axis 20 of the stator assembly 10. The layered structure 18 is bent to form teeth, or poles, 22, 24, 26, 28, 30, 32, 34, 36 and 38 of the stator core as well as connecting sections, such as 40, 42 between the stator teeth. The layered structure 18 is joined at it ends 44 to form a closed stator core. Preferably, as shown in Fig. 1, the layers 12, 14, 16 of the layered structure 18 are not aligned at the ends 44 to join one end of the layered structure with a neighboring end in an interlacing manner.

In bending the layered structure 18 as shown in Fig. 1, stator teeth or poles 22 to 38 and connecting sections, such as 40, 42 are formed wherein a gap, such as 46, 48 is created in each tooth 22 to 38 which can be used as a ventilation channel.

At the end 44 of the layered structure 18, holes 50 are provided for connecting this end 44 with a neighboring end of the layered structure, e.g. by rivets, screws or the like. Of course, any other type of suitable connection can be used for joining the structure of the stator assembly.

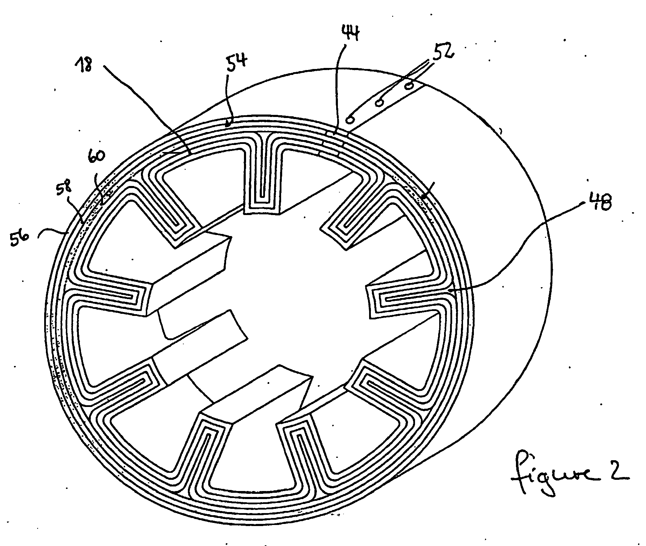

Fig. 2 shows the closed ring structure of Fig. 1, connected at the ends 44 of the layered structure 18 which is fixedly connected e.g. by rivets 52. The stator core formed from the layered structure 18 is surrounded by a second layered structure 54, formed from three metal bands 56, 58, 60, forming a yoke of the stator assembly 10. The yoke formed from the second layered structure 54 comprises circular metal sheet bands. It serves for redirecting the magnetic flux.

As shown in Fig. 2, the gap 46, 48 within the stator teeth remains open to the outside, even when the stator core is surrounded by the second layered structure 54 forming the yoke. Accordingly, the gap 46, 48 can serve as a in-tooth ventilation channel for cooling the stator during operation.

In one embodiment of the invention, a thermal sensor (not shown) can be provided in the gap 46, 48. The output of the thermal sensor can be provided to an electronic unit for controlling the stator temperature. This embodiment is particularly useful for a motor having a cooling fan or another type of cooling means for controlling the motor temperature.

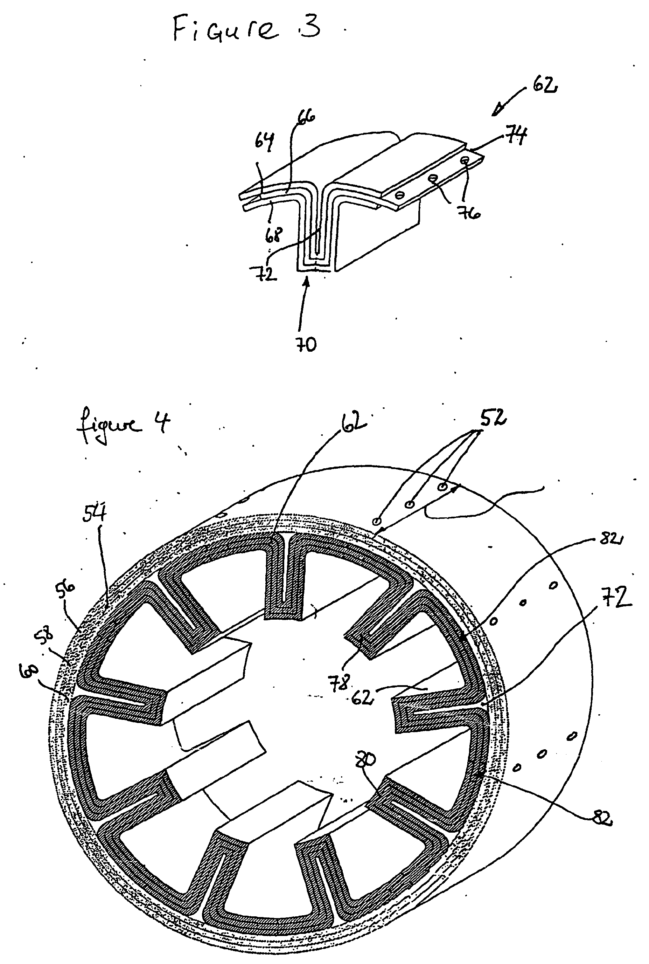

Fig. 3 shows a schematic perspective view of a stator segment for forming a stator assembly according to a second embodiment of the invention. The stator segment 62 is formed from three metal bands 64, 66, 68 which are bent to form one stator tooth 70 having a ventilation gap 72. As shown in fig. 3, the three metal bands 64, 66, 68 are arranged in an overlapping manner at each end 74 of the stator segment 62 so that they do not abut but can be joined to a neighboring stator segment in an interlacing manner. Further, at the end 74 of the stator segment 62, holes 76 are provided for connecting the stator segment 62 with a neighboring stator segment.

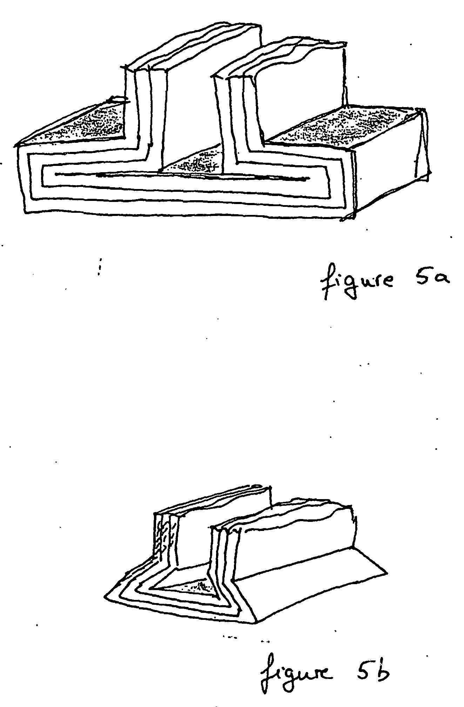

Fig. 4 shows the stator assembly according to the present invention which is constructed from a number of stator segments 62 as shown in fig. 3. In particular, the stator assembly of fig. 4 comprises nine stator segments, e.g. 62, which are connected with neighboring stator segments, such as 78, 80, in an interlacing manner, as indicated at 82, to form a closed stator ring. As shown in fig. 4, the closed ring structure, comprising nine stator segments 62, 78, 80, etc, is surrounded by a second layered structure 54, formed form three metal bands 56, 58, 60, forming a yoke of the stator assembly, as in the embodiment of fig. 2.

The embodiment of fig. 3 has the advantage that each stator segment 62 can be provided with a pre-wound coil (not shown), before the stator segments, 62, 78, 80, etc., are joined at their ends, e.g. 74, for forming the closed stator ring. Subsequently, the separate pre-wound coils, located on the stator teeth, are appropriately connected. This embodiment enables a particularly simple winding technique.

In one further, particularly advantageous embodiment of the invention, which is based on the embodiment of figs. 1 and 2, the stator assembly is manufactured by first bending the stator teeth 22, 24, 26, etc., to be arranged in a straight line; subsequently, the coil windings are provided on the stator teeth; and only after the coil windings have been wound on the stator teeth, the layered structure 18 is bent to form a closed stator core.

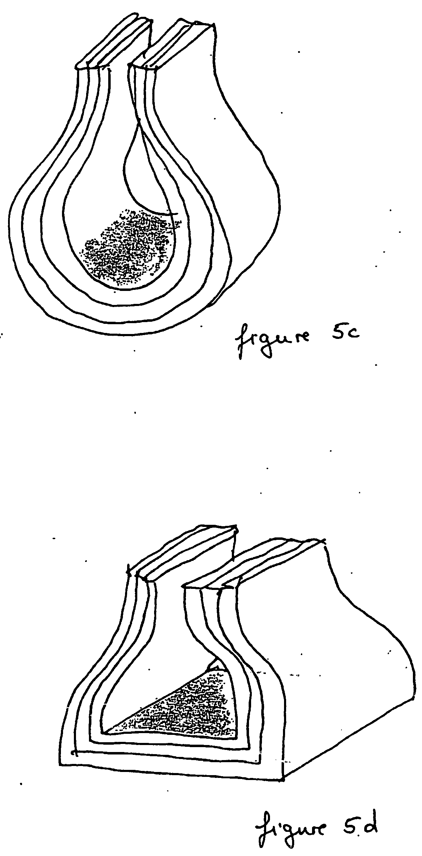

Fig. 5a, 5b, 5c, 5d, 5e and 5f illustrate possible shapes of tooth tips which can be realized with the present invention.

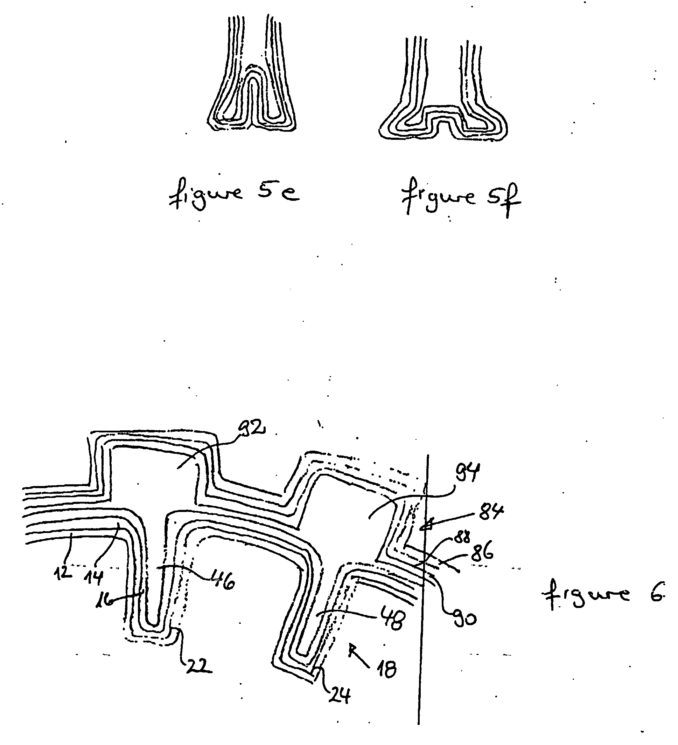

Fig. 6 shows a schematic sectional view through part of a stator assembly formed from a plurality of stator segments and including a yoke surrounding the stator core. In particular, the stator assembly of fig. 6 comprises a stator core formed from a first layer structure 18 comprising metal bands 12, 14, 16 which are bent to form stator teeth or poles 22, 24. The stator teeth or poles 22, 24 are bent in a way that a gap 46, 48 is created in each tooth 22, 24 which can be used as a ventilation channel. In the embodiment of fig. 6 the stator core is surrounded by a second layer structure 84, formed from three metal bands 86, 88, 90 to form a yoke of the stator assembly. The second layered structure 84 is formed to provide additional ventilation channels 92, 94 opposite the gaps 46, 48 in the stator teeth 22, 44 for improving the overall cooling efficiency of the stator during operation.

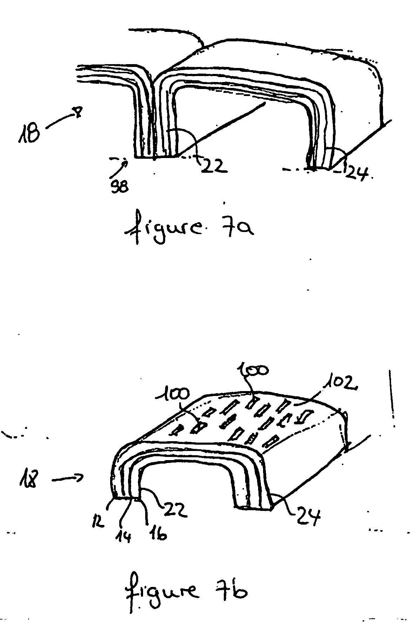

Fig. 7a and 7b show further embodiments of the stator assembly according to the present invention for improving the eddy current behavior. According to fig. 7a the stator core is formed by bending the layered structure 18 basically as shown in fig. 1 and subsequently cutting of the tips 96 of the stator teeth 22, 24. A cutting line is schematically indicated at 98. The design of fig. 7a improves the eddy current behavior of the stator assembly in the pole shoe zone.

Fig. 7b shows a further embodiment of the stator assembly according to the present invention. The layered structure 18 is formed from three metal bands as shown in fig. 7a, formed by bending the layered structure and cutting off the tips of the stator teeth 22, 24 as explained above. In addition, in each metal band 12, 14, 16 small slots 100 are provided in the section 102 bridging to stator teeth 22, 24. The slots preferably have a length of less than 0,2 mm. The design of fig. 7b helps to improve the eddy current behavior in the back yoke zone.

The features disclosed in the above specification, the claims and the drawings can be relevant for implementing the various embodiments of the present invention when taken alone or in any combination thereof.

### Bezugszeichenliste:

- 10: stator assembly
- 12, 14, 16: metal bands, layers
- 18: layered structure
- 20: axis
- 22, 24, 26, 28, 30, 32, 34, 36, 38: teeth or poles
- 40, 42: connecting sections
- 44: layered structure ends
- 46,48: gap
- 50: holes
- 52: rivets
- 54: second layered structure
- 56, 58, 60: metal bands
- 62: stator segment
- 64, 66, 68: metal bands
- 70: stator tooth
- 72: ventilation gap
- 74: stator sector ends
- 76: holes
- 78, 80: stator sectors
- 82: interlacing connection
- 86, 88, 90: metal bands
- 92, 94: ventilation channels
- 96: tip of stator tooth
- 98: cutting line
- 100: slot
- 102: bridging section
- 110: shaft
- 112: yoke
- 114: motor housing
- 116: stator assembly
- 118: stator assembly
- 122: permanent magnets
- 124: flange
- 126, 128: bearings
- 155: sheet metals
- 160: phase windings

## Claims

1. Stator assembly for an electrical machine, comprising at least one metal sheet (12, 14, 16) forming a structure (18), which extends in a direction which is generally parallel to a longitudinal axis (20) of the stator assembly (10), wherein the structure (18) is bent to form at least a sector of a stator core, said sector including at least one tooth (22) of the stator core, **characterized in that** a gap (46, 48) remains in the interior of said tooth to provide an in-tooth ventilation channel for cooling the stator assembly during operation.

2. Stator assembly of claim 1 wherein the structure (18) comprises a plurality of metal sheets which form a layered structure which is bent to form said one sector of the stator core

3. Stator assembly of claim 2, wherein two to six metal bands (12, 14, 16) are arranged on top of each other to form said layered structure (18).

4. Stator assembly of one of the preceding claims, wherein the stator sector comprises one tooth (70) of the stator core and adjacent connecting sections (40, 42) on both sides of said tooth for connecting the stator sector with further neighboring stator sectors.

5. Stator assembly of one of the preceding claims, wherein the stator sector comprises a plurality of teeth (20-38) and a plurality of connecting sections (40, 42) between said teeth which are configured to form a stator core.

6. Stator assembly of one of the preceding claims, wherein a second structure (54) is formed from at least one metal bands (56, 58, 60) closely encircling said stator core for providing a yoke of said stator assembly.

7. Stator assembly of claim 2 and one of the preceding claims, wherein the layers of said layered structure (18, 54) are joined at their edges with neighboring layers in an interlacing manner.

8. Method of manufacturing a stator assembly, comprising the steps of:
providing at least one metal band (12, 14, 16) ;
arranging the metal band (12, 14, 16) for forming a structure (18) which extends in a direction which is generally parallel to a longitudinal axis of the stator assembly; and
bending said structure to form at least a sector (62) of a stator core, wherein said sector is bent to form at least one tooth (22-38) of the stator core, **characterized in that** a gap (46, 48) remains in the interior of said tooth to provide an in-tooth ventilation channel for cooling the stator assembly during operation.

9. Method of claim 8, wherein a plurality of metal bands are arranged on top of each other to form said structure as a layered structure (18).

10. Method of claim 8 or 9, wherein the structure (18) is bent to form one tooth (70) of one stator sector (62) and adjacent connecting sections on both sides of said tooth for connecting the stator sector with further neighboring stator sectors.

11. Method of claim 8 or 9, wherein the structure (18) is bent to form a plurality of teeth (22-38) and a plurality of connecting sections between said teeth which are configured to form a stator core.

12. Method of one of claims 8 to 11, wherein stator windings are provided on the teeth of each stator sector before connecting said stator sectors.

13. Method of claim 11, wherein said structure (18) is configured so that the teeth (22-38) are arranged in a substantially straight linear arrangement, stator windings are provided on the teeth of the structure (18), and the structure (18) is bent to form a closed stator core.

## Patentansprüche

1. Statoranordnung für eine elektrische Maschine mit folgenden Merkmalen:
wenigstens eine Metallamelle (12, 14, 16) zum Bilden einer Struktur (18), die sich in eine Richtung erstreckt, die im wesentlichen parallel zu einer Längsachse (20) der Statoranordnung (10) ist, wobei die Struktur (18) so gebogen wird, daß sie wenigstens einen Abschnitt eines Statorkerns bildet, wobei der Abschnitt wenigstens einen Zahn (22) des Statorkerns umfaßt, **dadurch gekennzeichnet, daß** ein Spalt (46, 48) im Inneren des Zahnes verbleibt, um einen Belüftungskanal innerhalb des Zahns zum Kühlen der Statoranordnung während des Betriebs zu bilden.

2. Statoranordnung nach Anspruch 1, wobei die Struktur (18) mehrere Metallamellen auf weist, die eine Schichtstruktur bilden, die gebogen sind, um den einen Abschnitt des Statorkerns zu bilden.

3. Statoranordnung nach Anspruch 2, wobei zwei bis sechs Metallbänder (12, 14, 16) übereinander angeordnet werden, um die Schichtstruktur (18) zu bilden.

4. Statoranordnung nach einem der vorangehenden Ansprüche, wobei der Statorabschnitt einen Zahn (70) des Statorkerns und benachbarte Verbindungsabschnitte (40, 42) auf beiden Seiten des Zahns zum Verbinden des Statorabschnittes mit weiteren benachbarten Statorabschnitte aufweist.

5. Statoranordnung nach einem der vorangehenden Ansprüche, wobei der Statorabschnitt mehrere Zähne (20-38) und mehrere Verbindungsabschnitte (40, 42) zwischen den Zähnen, die zum Bilden eines Statorkerns konfiguriert sind, aufweist.

6. Statoranordnung nach einem der vorangehenden Ansprüche, wobei eine zweite Struktur (54) aus wenigstens einem Metallband (56, 58, 60) gebildet ist, welches den Statorkern eng umschließt, um einen Rückschluß der Statoranordnung vorzusehen.

7. Statoranordnung nach Anspruch 2 und einem der vorangehenden Ansprüche, wobei die Schichten der Schichtstruktur (18, 54) an ihren Kanten mit benachbarten Schichten verschränkt verbunden sind.

8. Verfahren zum Herstellen einer Statoranordnung mit folgenden Verfahrensschritten:
Vorsehen wenigstens eines Metallbandes (12, 14, 16);
Anordnen des Metallbandes (12, 14, 16) zum Bilden einer Struktur (18), die sich in einer Richtung erstreckt, die im wesentlichen parallel zu einer Längsachse der Statoranordnung ist; und
Biegen der Struktur zum Bilden wenigstens eines Abschnittes (62) eines Statorkerns, wobei der Abschnitt so gebogen wird, daß er wenigstens einen Zahn (22-38) des Statorkerns bildet, **dadurch gekennzeichnet, daß** ein Spalt (46, 48) im Inneren des Zahns verbleibt, um einen Belüftungskanal innerhalb des Zahns zum Kühlen der Statoranordnung während des Betriebs vorzusehen.

9. Verfahren nach Anspruch 8, wobei mehrere Metallbänder übereinander angeordnet werden, um die Struktur als eine Schichtstruktur (18) zu bilden.

10. Verfahren nach Anspruch 8 oder 9, wobei die Struktur (18) gebildet wird, um einen Zahn (70) eines Statorabschnittes (62) und benachbarte Verbindungsabschnitte auf beiden Seiten des Zahns zu bilden, um den Statorabschnitt mit weiteren benachbarten Statorabschnitte zu verbinden.

11. Verfahren nach Anspruch 8 oder 9, wobei die Struktur (18) gebogen wird, um mehrere Zähne (22-38) und mehrere Verbindungsabschnitte zwischen den Zähnen zu bilden, die zum Bilden eines Statorkerns konfiguriert sind.

12. Verfahren nach einem der Ansprüche 8 bis 11, wobei auf den Zähnen jedes Statorabschnittes Wicklungen vorgesehen werden, bevor die Statorabschnitte gebogen werden.

13. Verfahren nach Anspruch 11, wobei die Struktur (18) so konfiguriert wird, daß die Zähne (22-38) in im wesentlichen gerader Linie angeordnet werden, Statorwicklungen auf die Zähne der Struktur (18) aufgebracht werden und die Struktur (18) gebogen wird, um einen geschlossenen Statorkern zu bilden.

## Revendications

1. Stator pour une machine électrique, comprenant au moins une feuille métallique (12, 14, 16) formant une structure (18) qui s'étend dans une direction généralement parallèle à un axe longitudinal (20) du stator (10), dans lequel la structure (18) est cintrée pour former au moins un secteur d'un noyau de stator, ledit secteur comprenant au moins une dent (22) du noyau de stator et **caractérisé en ce qu'**un espace (46, 48) reste à l'intérieur de ladite dent pour fournir un canal de ventilation interne de dent destiné à refroidir le stator en service.

2. Stator selon la revendication 1 dans lequel la structure (18) comprend plusieurs feuilles métalliques formant une structure stratifiée qui est cintrée pour former ledit secteur du noyau de stator.

3. Stator selon la revendication 2, dans lequel de deux à six bandes métalliques (12, 14, 16) sont disposées les unes sur les autres pour former ladite structure stratifiée (18).

4. Stator selon l'une des revendications précédentes, dans lequel le secteur de stator comprend une dent (70) du noyau de stator et des sections reliées adjacentes (40, 42) des deux côtés de ladite dent pour relier le secteur de stator avec des secteurs de stator voisins supplémentaires.

5. Stator selon l'une des revendications précédentes, dans lequel le secteur de stator comprend plusieurs dents (20-38) et plusieurs sections reliées (40, 42) entre lesdites dents qui sont.configurées pour former un noyau de stator.

6. Stator selon l'une des revendications précédentes, dans lequel une seconde structure (54) est formée à partir d'au moins une bande métallique (56, 58, 60) encerclant de près ledit noyau de stator pour fournir une fourche dudit stator.

7. Stator selon la revendication 2 et l'une des revendications précédentes, dans lequel les couches de ladite structure stratifiée (18, 54) sont reliées par leurs bords en s'imbriquant avec les couches voisines.

8. Procédé de fabrication d'un stator, comprenant les étapes consistant à :,fournir au moins une bande métallique (12, 14, 16) ;
placer la bande métallique (12, 14, 16) pour former une structure (18) qui s'étend dans une direction généralement parallèle à un axe longitudinal (20) du stator ; et
cintrer ladite structure pour former au moins un secteur (62) d'un noyau de stator, dans lequel ledit secteur est cintré pour former au moins une dent (22-38) du noyau de stator, **caractérisé en ce qu'**un espace (46, 48) reste à l'intérieur de ladite dent pour former un canal de ventilation dans la dent pour refroidir le stator en service.

9. Procédé selon la revendication 8, dans lequel plusieurs bandes métalliques sont disposées les unes sur les autres pour former ladite structure en tant que structure stratifiée (18).

10. Procédé selon la revendication 8 ou 9, dans lequel la structure (18) est cintrée pour former une dent (70) d'un secteur de stator (62) et des sections reliées adjacentes sur les deux côtés de ladite dent pour relier le secteur de stator avec des secteurs de stator voisins supplémentaires.

11. Procédé selon la revendication 8 ou 9, dans lequel la structure (18) est cintrée pour former plusieurs dents (22-38) et plusieurs sections reliées entre lesdites dents qui sont configurées pour former un noyau de stator.

12. Procédé selon l'une quelconque des revendications 8 à 11, dans lequel des enroulements de stator sont prévus sur les dents de chaque secteur de stator avant de relier lesdits secteurs de stator.

13. Procédé selon la revendication 11, dans lequel ladite structure (18) est configurée de manière à ce que les dents (22-38) soient disposées en une ligne substantiellement droite, des enroulements de stator sont prévus sur les dents de la structure (18) et la structure (18) est cintrée pour former un noyau de stator fermé.
